(19) Europäisches Patentamt / European Patent Office / Office européen des brevets

(11) **EP 4 579 785 A1**

(12) **EUROPEAN PATENT APPLICATION**

(43) Date of publication:
**02.07.2025 Bulletin 2025/27**

(21) Application number: **24217975.2**

(22) Date of filing: **06.12.2024**

(51) International Patent Classification (IPC):
$H01M\ 4/131^{(2010.01)}$  $H01M\ 4/1391^{(2010.01)}$
$H01M\ 4/36^{(2006.01)}$  $H01M\ 4/505^{(2010.01)}$
$H01M\ 4/525^{(2010.01)}$  $H01M\ 4/62^{(2006.01)}$
$H01M\ 10/0525^{(2010.01)}$  $H01M\ 4/02^{(2006.01)}$

(52) Cooperative Patent Classification (CPC):
H01M 4/131; H01M 4/1391; H01M 4/366;
H01M 4/505; H01M 4/525; H01M 4/625;
H01M 10/0525; H01M 2004/028

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **08.12.2023 KR 20230178034**

(71) Applicants:
• **SAMSUNG SDI CO., LTD.**
  **Yongin-si, Gyeonggi-do 17084 (KR)**
• **Research & Business Foundation Sungkyunkwan University**
  **Gyeonggi-do 16419 (KR)**

(72) Inventors:
• **Kim, Jinyoung**
  Yongin-si  17084 (KR)
• **Kim, Young-Jun**
  Suwon-si  16419 (KR)
• **Seo, Jae Kwon**
  Suwon-si 16419 (KR)
• **Kim, Yeong Jin**
  Suwon-si 16419 (KR)
• **Ha, Seong Whoan**
  Suwon-si 16419 (KR)

(74) Representative: **Michalski Hüttermann & Partner Patentanwälte mbB**
**Kaistraße 16A**
**40221 Düsseldorf (DE)**

(54) **POSITIVE ELECTRODE ACTIVE MATERIALS, PREPARATION METHODS THEREOF, POSITIVE ELECTRODES, AND RECHARGEABLE LITHIUM BATTERIES**

(57)    Embodiments of the disclosure include a positive electrode active material, a method of preparing the same, a positive electrode, and a rechargeable lithium battery, the positive electrode active material including particles including a lithium transition metal composite oxide, and a coating layer located on a surface of the particles and including porous graphene.

FIG. 1

EP 4 579 785 A1

## Description

### BACKGROUND

**1. Field**

Positive electrode active materials, preparation methods thereof, positive electrodes including the same, and rechargeable lithium batteries are disclosed.

**2. Description of the Related Art**

A portable information device such as, e.g., a cell phone, a laptop, a smart phone, and the like, or an electric vehicle, typically uses a rechargeable lithium battery having high energy density and easy portability as a driving power source. Research is being conducted to use a rechargeable lithium battery with high energy density as a driving power source or power storage power source for hybrid or electric vehicles.

Various positive electrode active materials may constitute rechargeable lithium batteries for the above applications. Among such positive electrode active materials, lithium nickel-based oxide, lithium nickel manganese cobalt composite oxide, lithium nickel cobalt aluminum composite oxide, and lithium cobalt oxide may be used. However, demand for large-sized, high-capacity, or high-energy-density rechargeable lithium batteries continues to increase, necessitating more development of positive electrode active materials.

### SUMMARY

Example embodiments include a positive electrode active material configured to improve electrode performance by promoting lithium movement, and to improve energy density per volume by increasing electrode density, a method of preparing the positive electrode active material, and a positive electrode and a rechargeable lithium battery including the positive electrode active material.

Examples embodiments include a positive electrode active material having particles including a lithium transition metal composite oxide, and a coating layer located on a surface of the particles and including porous graphene.

In some example embodiments, a method of preparing a positive electrode active material includes preparing an etching solution in which an etchant is added to a first solvent, adding graphene oxide powder to the etching solution, and stirring the solution to prepare a mixed solution, filtering and drying the mixed solution, and preforming heat treatment of the resultant to obtain porous graphene, adding the porous graphene to a second solvent and dispersing the porous graphene in the second solvent to prepare a dispersion, adding particles including a lithium transition metal composite oxide to the dispersion and mixing the particles in the dispersion.

In some example embodiments, a positive electrode includes a positive electrode current collector; and a positive electrode active material layer on the positive electrode current collector; wherein the positive electrode active material layer includes the aforementioned positive electrode active material and a binder.

Example embodiments include a rechargeable lithium battery including the aforementioned positive electrode, a negative electrode, and an electrolyte.

The positive electrode active material according to some example embodiments improves lithium mobility by smoothly promoting lithium movement, improves energy density by increasing electrode density, and can also secure economic efficiency by minimizing production costs. A rechargeable lithium battery using the positive electrode active material can promote the movement of lithium ions, exhibit high rate capability, and improve electrode performance.

### BRIEF DESCRIPTION OF THE DRAWINGS

FIGS. 1 to 4 are cross-sectional views schematically illustrating rechargeable lithium batteries according to some example embodiments.

FIG. 5 shows images taken with a scanning electron microscope (SEM) at ×7,000 magnification and at ×30,000 magnification for the positive electrode active material particles prepared in Comparative Example 1.

FIG. 6 shows images taken using SEM at ×7,000 magnification and at ×30,000 magnification for the positive electrode active material particles prepared in Comparative Example 2.

FIG. 7 shows images taken using SEM at ×7,000 magnification and at ×30,000 magnification for the positive electrode active material particles prepared in Example 1.

FIG. 8 shows an image taken using SEM of the surface of the positive electrode active material prepared in Comparative Example 1.

FIG. 9 shows an image taken using SEM of the surface of the positive electrode active material prepared in Comparative Example 2.

FIG. 10 shows an image taken using SEM of the surface of the positive electrode active material prepared in Example 1.

FIG. 11 shows the results of Raman spectrum analysis for the positive electrode active material prepared in Example 1.

FIG. 12 shows the results of Raman spectrum analysis for the positive electrode active materials prepared in Example 1 and Comparative Examples 1 and 2.

FIG. 13 shows the evaluation results of rate discharge capability for the rechargeable lithium battery cells manufactured in Example 1 and Comparative Examples 1 and 2.

FIG. 14 shows a cyclic voltammetry (CV) graph for the positive electrode manufactured in Comparative Example 1.

FIG. 15 shows a cyclic voltammetry (CV) graph for the positive electrode manufactured in Comparative Example 2.

FIG. 16 shows a cyclic voltammetry (CV) graph for the positive electrode manufactured in Example 1.

FIG. 17 is a cyclic voltammetry (CV) graph showing the peak current versus the square root of the scan rate during the reduction process for the positive electrodes manufactured in Example 1 and Comparative Examples 1 and 2.

FIG. 18 is a cyclic voltammetry (CV) graph showing peak current versus the square root of scan rate during the oxidation process for the positive electrodes prepared in Example 1 and Comparative Examples 1 and 2.

FIG. 19 shows the initial impedance measurement results of the rechargeable lithium battery cells manufactured in Example 1 and Comparative Examples 1 and 2.

FIG. 20 shows the impedance measurement results of symmetric cells for the rechargeable lithium battery cells manufactured in Example 1 and Comparative Examples 1 and 2.

FIG. 21 shows the impedance measurement results of the rechargeable lithium battery cells manufactured in Example 1 and Comparative Examples 1 and 2 after 50 cycles of cycle-life.

FIG. 22 shows the impedance resistance results for the rechargeable lithium battery cells manufactured in Example 1 and Comparative Example 2.

FIG. 23 shows the results of X-ray photoelectron analysis (XPS) for each graphene used in Reference Example, Example 1, and Comparative Example 2.

FIG. 24 shows the results of X-ray photoelectron analysis (XPS) analysis of the C1s peak in FIG. 23.

FIG. 25 shows the results of X-ray photoelectron analysis (XPS) analysis of the O1s peak in FIG. 23.

FIG. 26 shows the results of FT-IR analysis for each graphene used in Reference Example, Example 1, and Comparative Example 2.

FIG. 27 shows the results of electrical conductivity analysis for each graphene used in Reference Example, Example 1, and Comparative Example 2.

FIG. 28 shows the analysis results of specific surface area and pore size for each graphene used in Reference Example, Example 1, and Comparative Example 2.

FIG. 29 shows the evaluation results of rate discharge capability according to changes in stirring time during the preparing process of porous graphene.

FIG. 30 shows the results of evaluating rate discharge capability according to the concentration change of the etching solution during the preparing process of porous graphene.

## DETAILED DESCRIPTION

Hereinafter, example embodiments will be described in detail so that those of ordinary skill in the art can readily implement the example embodiments. However, this disclosure may be embodied in many different forms and is not construed as limited to the example embodiments set forth herein.

The terminology used herein is used to describe example embodiments only, and is not intended to limit the present disclosure. The singular expression includes the plural expression unless the context clearly dictates otherwise.

As used herein, "combination thereof" means a mixture, a laminate, a composite, a copolymer, an alloy, a blend, a reaction product, and the like of the constituents.

Herein, it should be understood that terms such as "comprises," "includes," or "have" are intended to designate the presence of an embodied feature, number, step, element, or a combination thereof, but it does not preclude the possibility of the presence or addition of one or more other features, number, step, element, or a combination thereof.

In the drawings, the thickness of layers, films, panels, regions, etc., are exaggerated for clarity and like reference numerals designate like elements throughout the specification. It will be understood that when an element such as a layer, film, region, or substrate is referred to as being "on" another element, it can be directly on the other element or intervening elements may also be present. In contrast, when an element is referred to as being "directly on" another element, there are no intervening elements present.

In addition, "layer" herein includes not only a shape formed on the whole surface when viewed from a plan view, but also a shape formed on a partial surface.

The average particle diameter may be measured by a method that is well known to those skilled in the art, for example, by a particle size analyzer, or by a transmission electron microscope image or a scanning electron microscope image. Alternatively, it is possible to obtain an average particle diameter value by measuring using a dynamic light scattering method, performing data analysis, counting the number of particles for each particle size range, and calculating from this. Unless otherwise defined, the average particle diameter may mean the diameter ($D_{50}$) of particles having a cumulative volume of 50 volume% in the particle size distribution. As used herein, when a definition is not otherwise provided, the average particle diameter means a diameter ($D_{50}$) of particles having a cumulative volume of 50 volume% in the particle size distribution that is obtained by measuring the size (diameter or major axis length) of about 20 particles at random in a scanning electron microscope image.

Here, "or" is not to be interpreted in an exclusive sense, for example, "A or B" is interpreted as "including A, including B, or including A and B."

"Metal" is interpreted as a concept including ordinary metals, transition metals and metalloids (semi-metals).

When the terms "about" or "substantially" are used in this specification in connection with a numerical value, it is intended that the associated numerical value include a tolerance of ±10% around the stated numerical value. When ranges are specified, the range includes all values therebetween such as increments of 0.1%.

## Positive Electrode Active Material

In some example embodiments, a positive electrode active material includes particles including a lithium transition metal composite oxide; and a coating layer located on the surface of the particles and including porous graphene.

Among the main conductive materials used in the positive electrode, conductive materials such as carbon black with a 0D (Zero-Dimension) type or small sphere shape structure may be used. These conductive materials are typically too short to contact and electrically connect the positive electrode active material, so that a large amount of conductive material may be required. In addition, the spherical conductive material has a typically strong incompressibility, which makes it difficult to secure volumetric energy density for stacking a large amount of positive electrode active material inside the battery, resulting in high costs for high-density electrode forming. In order to increase the volumetric energy density, graphene can be used as a conductive material, but in the case of graphene, it may be challenging to move lithium in a direction perpendicular to the plane (basal plane). To solve this problem, porous graphene, which has many pores formed on the surface of graphene, can be used, and the movement of lithium ions can be smoothly promoted.

Accordingly, some example embodiments include a positive electrode active material, by introducing a coating layer having porous graphene on the surface of the particles including a lithium transition metal composite oxide, lithium movement proceeds smoothly, thereby ensuring improved lithium mobility and electrode performance.

## Particles Including Lithium Transition Metal Composite Oxide

The positive electrode active material includes particles including a lithium transition metal composite oxide. As an example, the lithium transition metal composite oxide may be or include a lithium nickel-based composite oxide and may have a layered structure.

A nickel content in the lithium nickel-based composite oxide may be greater than or equal to about 30 mol%, for example, greater than or equal to about 40 mol%, greater than or equal to about 50 mol%, greater than or equal to about 60 mol%, greater than or equal to about 70 mol%, greater than or equal to about 80 mol%, or greater than or equal to about 90 mol%, and may be less than or equal to about 99.9 mol% or less than or equal to about 99 mol% based on a total amount of elements excluding lithium and oxygen. For example, the nickel content in the lithium nickel-based composite oxide may be higher than the content of each other element, such as cobalt, manganese, and aluminum. When the nickel content satisfies any of the above ranges, the positive electrode active material can achieve high capacity and exhibit improved or desired battery performance.

The positive electrode active material may include a lithium nickel-based composite oxide represented by Chemical Formula 1.

[Chemical Formula 1]    $Li_{a1}Ni_{x1}M^1_{y1}M^2_{z1}O_{2-b1}X_{b1}$

In Chemical Formula 1, $0.9 \leq a1 \leq 1.8$, $0.3 \leq x1 \leq 1$, $0 \leq y1 \leq 0.7$, $0 \leq z1 \leq 0.7$, $0.9 \leq x1+y1+z1 \leq 1.1$, and $0 \leq b1 \leq 0.1$, $M^1$ and $M^2$ are or include independently Al, B, Ba, Ca, Ce, Co, Cr, Fe, Mg, Mn, Mo, Nb, Si, Sr, Ti, V, W, Zr, or a combination thereof, and X is F, P, S, or a combination thereof.

In Chemical Formula 1, $0.4 \leq x1 \leq 1$, $0 \leq y1 \leq 0.6$, and $0 \leq z1 \leq 0.6$; $0.5 \leq x1 \leq 1$, $0 \leq y1 \leq 0.5$, and $0 \leq z1 \leq 0.5$; $0.6 \leq x1 \leq 1$,

$0 \leq y1 \leq 0.4$, and $0 \leq z1 \leq 0.4$; $0.7 \leq x1 \leq 1$, $0 \leq y1 \leq 0.3$, and $0 \leq z1 \leq 0.3$; $0.8 \leq x1 \leq 1$, $0 \leq y1 \leq 0.2$, and $0 \leq z1 \leq 0.2$; or $0.9 \leq x1 < 1$, $0 < y1 \leq 0.1$, and $0 \leq z1 \leq 0.1$.

The positive electrode active material may include, for example, a lithium nickel-based composite oxide represented by Chemical Formula 2.

$$\text{[Chemical Formula 2]} \qquad Li_{a2}Ni_{x2}Co_{y2}M^3{}_{z2}O_{2-b2}X_{b2}$$

In Chemical Formula2, $0.9 \leq a2 \leq 1.8$, $0.3 \leq x2 < 1$, $0 < y2 \leq 0.7$, $0 \leq z2 \leq 0.7$, $0.9 \leq x2+y2+z2 \leq 1.1$, and $0 \leq b2 \leq 0.1$, $M^3$ is or includes Al, B, Ba, Ca, Ce, Cr, Fe, Mg, Mn, Mo, Nb, Si, Sr, Ti, V, W, Zr, or a combination thereof, and X is F, P, S, or a combination thereof.

In Chemical Formula 2, $0.3 \leq x2 \leq 0.99$, $0.01 \leq y2 \leq 0.7$, and $0 \leq z2 \leq 0.7$; $0.4 \leq x2 \leq 0.99$, $0.01 \leq y2 \leq 0.6$, and $0 \leq z2 \leq 0.6$; $0.5 \leq x2 \leq 0.99$, $0.01 \leq y2 \leq 0.5$, and $0 \leq z2 \leq 0.5$; $0.6 \leq x2 \leq 0.99$, $0.01 \leq y2 \leq 0.4$, and $0 \leq z2 \leq 0.4$; $0.7 \leq x2 \leq 0.99$, $0.01 \leq y2 \leq 0.3$, and $0 \leq z2 \leq 0.3$; $0.8 \leq x2 \leq 0.99$, $0.01 \leq y2 \leq 0.2$, and $0 \leq z2 \leq 0.2$; or $0.9 \leq x2 \leq 0.99$, $0.01 \leq y2 \leq 0.1$, and $0 \leq z2 \leq 0.1$.

The positive electrode active material may include, for example, a lithium nickel-based composite oxide represented by Chemical Formula 2A.

$$\text{[Chemical Formula 2A]} \qquad Li_{a2}Ni_{x2}Co_{y2}Mn_{z2}O_2$$

In Chemical Formula 2A, $0.9 \leq a2 \leq 1.8$, $0.3 \leq x2 < 1$, $0 < y2 \leq 0.7$, $0 < z2 \leq 0.7$, $0.9 \leq x2+y2+z2 \leq 1.1$.

In Chemical Formula 2A, $a2 + x2+y2+z2 = 2$.

The positive electrode active material may include, for example, a lithium nickel-based composite oxide represented by Chemical Formula 3.

$$\text{[Chemical Formula 3]} \qquad Li_{a3}Ni_{x3}Co_{y3}M^4{}_{z3}M^5{}_{w3}O_{2-b3}X_{b3}$$

In Chemical Formula 3, $0.9 \leq a3 \leq 1.8$, $0.3 \leq x3 \leq 0.98$, $0.01 \leq y3 \leq 0.69$, $0.01 \leq z3 \leq 0.69$, $0 \leq w3 \leq 0.69$, $0.9 \leq x3+y3+z3+w3 \leq 1.1$, and $0 \leq b3 \leq 0.1$, $M^4$ is or includes Al, Mn, or a combination thereof, $M^5$ is B, Ba, Ca, Ce, Cr, Fe, Mg, Mo, Nb, Si, Sr, Ti, V, W, Zr, or a combination thereof, and X is F, P, S, or a combination thereof.

In Chemical Formula 3, $0.4 \leq x3 \leq 0.98$, $0.01 \leq y3 \leq 0.59$, $0.01 \leq z3 \leq 0.59$, and $0 \leq w3 \leq 0.59$; $0.5 \leq x3 \leq 0.98$, $0.01 \leq y3 \leq 0.49$, $0.01 \leq z3 \leq 0.49$, and $0 \leq w3 \leq 0.49$; $0.6 \leq x3 \leq 0.98$, $0.01 \leq y3 \leq 0.39$, $0.01 \leq z3 \leq 0.39$, and $0 \leq w3 \leq 0.39$; $0.7 \leq x3 \leq 0.98$, $0.01 \leq y3 \leq 0.29$, $0.01 \leq z3 \leq 0.29$, and $0 \leq w3 \leq 0.29$; $0.8 \leq x3 \leq 0.98$, $0.01 \leq y3 \leq 0.19$, $0.01 \leq z3 \leq 0.19$, and $0 \leq w3 \leq 0.19$; or $0.9 \leq x3 \leq 0.98$, $0.01 \leq y3 \leq 0.09$, $0.01 \leq z3 \leq 0.09$, and $0 \leq w3 \leq 0.09$.

The particles including a lithium transition metal composite oxide may be in the form of polycrystals and may be in the form of secondary particles formed by agglomerating at least two primary particles.

A particle diameter ($D_{50}$) of the particles including a lithium transition metal composite oxide, that is, an average particle diameter of the secondary particles, may be greater than or equal to about 7 $\mu$m, greater than or equal to about 9 $\mu$m, greater than or equal to about 9.5 $\mu$m, or greater than or equal to about 10 $\mu$m, and may be less than or equal to about 25 $\mu$m, less than or equal to about 23 $\mu$m, or less than or equal to about 20 $\mu$m. The average particle diameter means a diameter ($D_{50}$) of particles having a cumulative volume of 50 volume% in the particle size distribution that is obtained by measuring the diameter of about 20 particles at random in a scanning electron microscope image of the positive electrode active material.

The particles including a lithium transition metal composite oxide may consist essentially out of the lithium transition metal composite oxide. Herein, "consisting essentially out of" may mean containing 95 wt% or more.

Coating Layer

The positive electrode active material includes a coating layer located on the surface of the particles including a lithium transition metal composite oxide, and the coating layer includes porous graphene in which a plurality of pores are formed in the graphene.

In conventional graphene, it is difficult to move lithium in a direction perpendicular to the plane, which may reduce lithium mobility. Therefore, porous graphene is used as a material for the coating layer. By using porous graphene, smooth movement of lithium is promoted even in the direction perpendicular to the plane of the graphene in the coating layer to improve electrode performance.

When using porous graphene as the coating layer material for the positive electrode active material, the electrical connection distance between the positive electrode active material and the porous graphene can be shorter than when simply adding and dispersing lithium transition metal composite oxide and a conductive material as the positive electrode material. A shorter electrical connection distance is advantageous for high-density electrode formation. In addition, by applying porous graphene as a coating layer material, it is possible to reduce or omit an amount of conductive material used in the manufacturing process of the positive electrode, which can be advantageous in improving energy density per volume of the electrode.

The porous graphene may be included in an amount of, for example, greater than or equal to about 0.05 wt%, greater than or equal to about 0.08 wt%, or greater than or equal to about 0.1 wt%, and less than or equal to about 3 wt%, less than or equal to about 2 wt%, less than or equal to about 1 wt%, less than or equal to about 0.5 wt%, or less than or equal to about 0.35 wt% based on a total weight of the positive electrode active material. Within any of the above ranges, the desired electrode performance and energy density per volume improvement can be effectively achieved.

In some example embodiments, the porous graphene may be included in an amount that is greater than or equal to about 60 wt%, for example greater than or equal to about 80 wt%, greater than or equal to about 90 wt%, or greater than or equal to about 95 wt%, based on a total weight of the coating layer including the porous graphene. In addition, the porous graphene may be included in an amount that is less than or equal to about 100 wt%, for example less than or equal to about 99.9 wt% based on a total weight of the coating layer. Within any of the above ranges, electrode performance can be effectively improved by promoting lithium mobility, and can be more advantageous in improving energy density per volume.

An average diameter of the pores for the porous graphene may be, for example, greater than or equal to about 10 nm, greater than or equal to about 20 nm, greater than or equal to about 30 nm, or greater than or equal to about 35 nm, or less than or equal to about 1 $\mu$m, less than or equal to about 95 nm, less than or equal to about 90 nm, or less than or equal to about 85 nm. In an example, an average distance between pores of the porous graphene may be, for example, about 30 nm to about 5 $\mu$m, wherein the average distance between pores represents the shortest distance between any two pores and can be measured through SEM image measurement. Within this range, porous graphene can smoothly promote lithium mobility, and the average diameter of the pores can be measured using various methods, for example, Barret-Joyner-Halenda (BJH) measurement or SEM image measurement.

The Brunauer-Emmett-Teller (BET) specific surface area of the porous graphene may be, for example, greater than or equal to about 15 $m^2$/g, greater than or equal to about 18 $m^2$/g, or greater than or equal to about 20 $m^2$/g, less than or equal to about 30 $m^2$/g, less than or equal to about 28 $m^2$/g, or less than or equal to about 25 $m^2$/g. Within any of the above ranges, improved or desired high rate capability and electrode performance of the positive electrode active material can be effectively achieved. For example, the BET specific surface area may be measured with a BET (Brunauer-Emmett-Teller) equipment using a gas adsorption method.

The coating layer may be formed by stacking sheet-shaped porous graphene on the surface of the particles including the lithium transition metal composite oxide. Therefore, the coating layer may include a plurality of porous graphene layers, for example, 1 to 30 graphene layers.

A thickness of the coating layer may be, for example, greater than or equal to about 0.3 nm, greater than or equal to about 0.6 nm, greater than or equal to about 0.9 nm, or greater than or equal to about 1.2 nm, and less than or equal to about 30 nm, less than or equal to about 28 nm, less than or equal to about 25 nm, or less than or equal to about 20 nm. Within any of the above ranges, high-density electrodes and improved or desired electrode performance can be effectively achieved. The coating layer on the surface of the particle may be formed continuously or discontinuously. The thickness of the coating layer can be measured by calculating the average value of the coating layer thickness from the SEM-EDS image of the cross-section of the positive electrode active material.

The positive electrode active material may satisfy Equation 1 below. Within this range, high electrode density and improved or desired electrode performance can be effectively achieved.

[Equation 1]

$$1.02 \leq I_D/I_G \leq 1.3$$

In Equation 1, $I_D$ represents the peak intensity around 1350 cm$^{-1}$ in Raman spectrum analysis, and $I_G$ represents the peak intensity around 1580 cm$^{-1}$ in Raman spectrum analysis.

## Method of Preparing Positive Electrode Active Material

In some example embodiments, a method of preparing a positive electrode active material includes preparing an etching solution in which an etchant is added to a first solvent, adding graphene oxide powder to the etching solution, and stirring the etching solution to prepare a mixed solution, filtering and drying the mixed solution, and preforming heat treatment of the resultant to obtain porous graphene, adding the porous graphene to a second solvent, and dispersing the porous graphene in the second solvent to prepare a dispersion, adding particles including a lithium transition metal composite oxide to the dispersion, and mixing the particles in the dispersion.

An etching solution used to perform surface treatment that forms defects or pores in graphene is prepared. The etching solution can be prepared by adding an etchant to the first solvent. The first solvent can be used without restrictions as long as the first solvent is a material that can dissolve the above etchant. For example, an aqueous solvent may be used as the first solvent, and the aqueous solvent can be or include distilled water, an alcohol-based solvent, or a combination thereof.

The etchant is a treatment agent used to form porous graphene through surface treatment and may be a basic compound. Examples of the etchant include KOH, NaOH, or a combination thereof. When such an etchant is used, graphene, which is used as a material for a coating layer, may be chemically surface-treated to form grooves or holes without a direct mechanical (or physical) treatment, effectively manufacturing porous graphene.

The etching solution may have a concentration of greater than or equal to about 1 M, greater than or equal to about 2 M, or greater than or equal to about 3 M, and less than or equal to about 15 M, less than or equal to about 13 M, less than or equal to about 12 M, less than or equal to about 10 M, or less than or equal to about 8 M. Herein, the concentration of the etching solution means a concentration of the etchant, and within the above concentration ranges, improved or desired discharge characteristics may be effectively secured within a C-rate range of about 0.02 C to less than about 5 C. On the other hand, when the etching solution has a concentration of about 3 M to about 8 M, improved or desired discharge characteristics may be secured even at a high rate of greater than or equal to about 5 C.

Subsequently, the graphene oxide powder is added to the etching solution, and subsequently stirred to prepare a mixed solution. During the process, the grooves or pores may be formed in the graphene oxide.

The stirring may be performed for greater than or equal to about 12 hours, greater than or equal to about 14 hours, or greater than or equal to about 15 hours, and less than or equal to about 72 hours, less than or equal to about 48 hours, less than or equal to about 45 hours, less than or equal to about 40 hours, or less than or equal to about 30 hours. When a positive electrode active material prepared to satisfy the above conditions is used, improved or desired discharge characteristics may be effectively secured within a c rate range of about 0.02 C to less than about 5 C. On the other hand, when a positive electrode active material prepared to satisfy a stirring time of about 15 hours to about 40 hours, improved or desired discharge characteristics may be secured at a high rate of greater than or equal to about 5 C.

After filtering and drying the mixed solution, a product obtained therefrom is heat-treated. Through the filtering and the drying, a porous graphene oxide is obtained, which is reduced through the heat treatment to obtain the porous graphene. On the other hand, the above description may be equally applied to porous graphene.

The heat treatment may be performed at a temperature that is greater than or equal to about 600 °C, greater than or equal to about 650 °C, greater than or equal to about 700 °C, greater than or equal to about 750 °C, or greater than or equal to about 800 °C, or less than or equal to about 1,000 °C, less than or equal to about 970 °C, less than or equal to about 950 °C, less than or equal to about 940 °C, less than or equal to about 910 °C, or less than or equal to about 900 °C. Within any of the above ranges, the graphene oxide may not only be effectively reduced and thus reduce or suppress a decrease in conductivity by oxygen (O), but also porous graphene may be effectively formed.

The heat treatment discussed above may be performed for a period of time that is greater than or equal to about 30 minutes, greater than or equal to about 40 minutes, greater than or equal to about 50 minutes, or greater than or equal to about 1 hour, or less than or equal to about 5 hours, less than or equal to about 3 hours, or less than or equal to about 2 hours. Within any of the above ranges, performance of the manufactured electrode may be effectively improved.

The heat treatment may be performed under a reduction atmosphere. The reduction atmosphere may include, for example, nitrogen as a primary component, and hydrogen within a range of about 0 volume% to about 10 volume%.

Porous graphene is added to a second solvent, and dispersed therein to prepare a dispersion. The second solvent may be or include an organic solvent, for example, at least one of dimethyl formamide (DMF), dimethylsulfoxide (DMSO), dimailacetamide (DMAc), dimethylcarbonate (DMC), 2,4,6-trimethylphenol (TMP), N-methyl-2-pyrrolidone (NMP), or a combination thereof.

In the dispersion, a content of the porous graphene may be about 0.5 wt% to about 5 wt%.

The dispersion may be performed by ultrasonication treatment, for example, by using a tip sonotrode equipment, which is an ultrasonic wave dispersion equipment, to uniformly disperse the porous graphene.

In order to form a coating layer on the particles including a lithium transition metal composite oxide, the particles including a lithium transition metal composite oxide are added to the dispersion, and subsequently mixed.

The mixing process of the particles including a lithium transition metal composite oxide with the dispersion may be performed at a temperature that is greater than or equal to about 10 °C, greater than or equal to about 15 °C, or greater than or equal to about 20 °C, and less than or equal to about 40 °C, less than or equal to about 35 °C, or less than or equal to about 30 °C, representatively, at room temperature. In another example, the mixing process of the particles including a lithium transition metal composite oxide with the dispersion may be performed under the above temperature conditions for a period of time that is greater than or equal to about 30 seconds, greater than or equal to about 40 seconds, greater than or equal to about 50 seconds, greater than or equal to about 1 minute, less than or equal to about 10 minutes, less than or equal to about 8 minutes, less than or equal to about 6 minutes, less than or equal to about 5 minutes, or less than or equal to about 2 minutes. Under the above conditions, the porous graphene-containing coating layer may be substantially uniformly formed on the surface of the particles including a lithium transition metal composite oxide.

After the mixing process of the particles including a lithium transition metal composite oxide with the dispersion, a washing process of washing with a third solvent that does substantially no damage to the positive electrode active material may be further included (referred to be as a washing process). The third solvent may be any solvent that does substantially no damage to the positive electrode active material without particular limitation, for example, an organic solvent, an alcohol-based solvent such as, for example, ethanol.

After the washing, a centrifugation process may be further performed to collect the porous graphene from the ethanol (referred to herein as a separation process). The centrifugation process may be performed at a rotation speed of about 1,000 rpm to about 5,000 rpm. In order to substantially completely dry the remaining solvent after the separation process, a drying process may be further performed, which may be performed under a vacuum atmosphere at a temperature of about 70 °C to about 100 °C.

**Positive Electrode**

In some example embodiments, a positive electrode includes a positive electrode current collector; and a positive electrode active material layer on the positive electrode current collector, wherein the positive electrode active material layer includes the aforementioned positive electrode active material and a binder. The positive electrode active material layer may optionally further include a conductive material.

According to some example embodiments, the electrode density of the final compressed positive electrode may be greater than or equal to about 3.5 g/cc, greater than or equal to about 3.6 g/cc, greater than or equal to about 3.8 g/cc, or greater than or equal to about 4.0 g/cc, or less than or equal to about 4.7 g/cc, less than or equal to about 4.6 g/cc, less than or equal to about 4.5 g/cc, or less than or equal to about 4.4 g/cc. When applying the positive electrode active material according to some example embodiments, it is advantageous to implement such a loading level and positive electrode density, and a positive electrode that satisfies the loading level and positive electrode density in the above ranges is suitable for implementing a high-capacity, high-energy-density rechargeable lithium battery.

Binder

The binder improves the binding properties of positive electrode active material particles with one another and with a current collector. Examples of binders may include, e.g., polyvinyl alcohol, carboxymethyl cellulose, hydroxypropyl cellulose, diacetyl cellulose, polyvinyl chloride, carboxylated polyvinyl chloride, polyvinyl fluoride, an ethylene oxide-containing polymer, polyvinylpyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, a polyester resin, and nylon, but are not limited thereto.

A content of the binder may be about 0.2 wt% to about 5 wt% based on 100 wt% of the positive electrode active material layer.

Conductive Material

The conductive material is included to provide electrode conductivity, and any electrically conductive material may be used as a conductive material unless the electrically conductive material causes a chemical change in the battery. Examples of the conductive material may include a carbon-based material such as, e.g., natural graphite, artificial graphite, carbon black, acetylene black, ketjen black, a carbon fiber, a carbon nanofiber, a carbon nanotube, and the like; a metal-based material of a metal powder or a metal fiber including copper, nickel, aluminum, silver, and the like; a conductive polymer such as a polyphenylene derivative; or a mixture thereof.

According to some example embodiments, the positive electrode active material layer may optionally include a conductive material. By using the positive electrode active material including the aforementioned porous graphene coating layer, an amount of conductive material required during the manufacturing process can be substantially reduced or omitted. Therefore, when the positive electrode active material layer includes a conductive material, a content of the conductive material may be less than or equal to about 5 wt%, less than or equal to about 3 wt%, less than or equal to about 1 wt%, less than or equal to about 0.5 wt%, and less than or equal to about 0.1 wt% based on 100% by weight of the positive electrode active material layer. Alternatively, the positive electrode active material layer may not include a conductive material. By forming a coating layer of the positive electrode active material using the aforementioned porous graphene, a use of a conductive material itself can be reduced or omitted, costs can be reduced, and better energy density per volume can be achieved.

The positive electrode current collector may include Al, but is not limited thereto.

## Rechargeable Lithium Battery

Some example embodiments include a rechargeable lithium battery including the aforementioned positive electrode, negative electrode, and electrolyte.

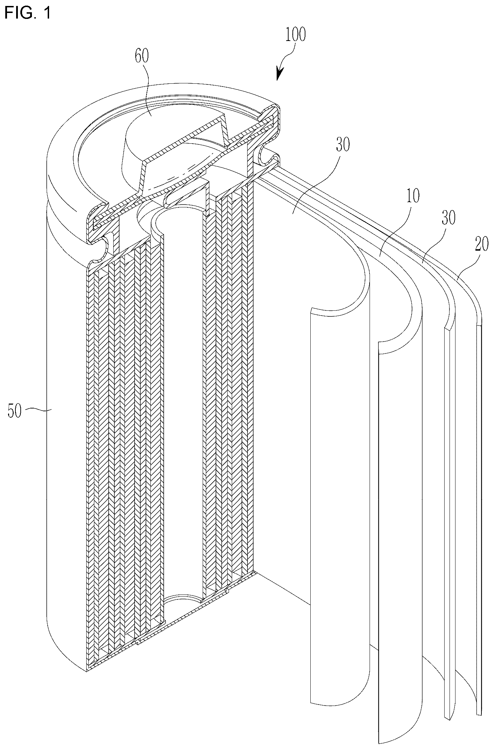

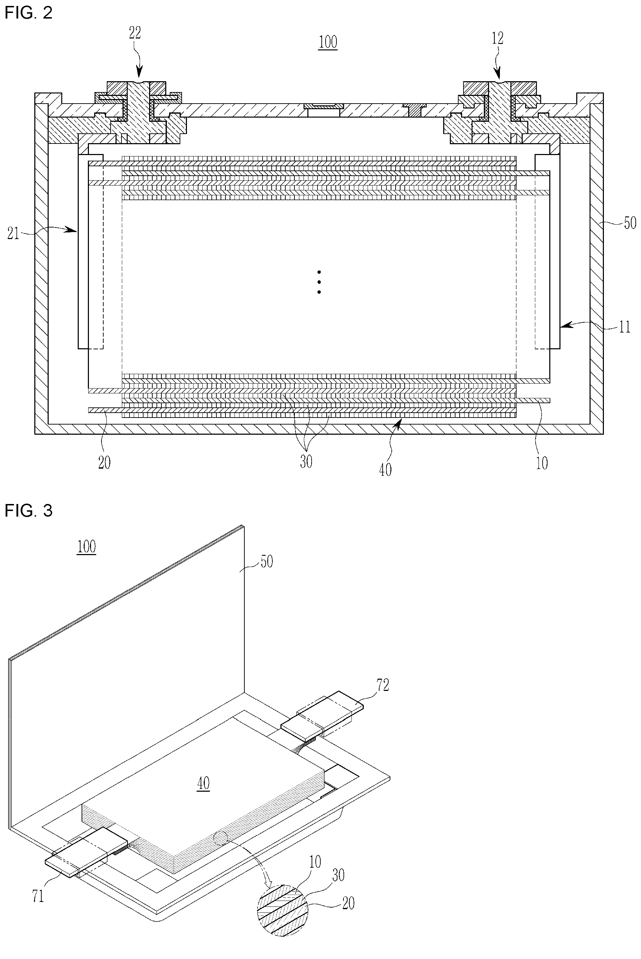

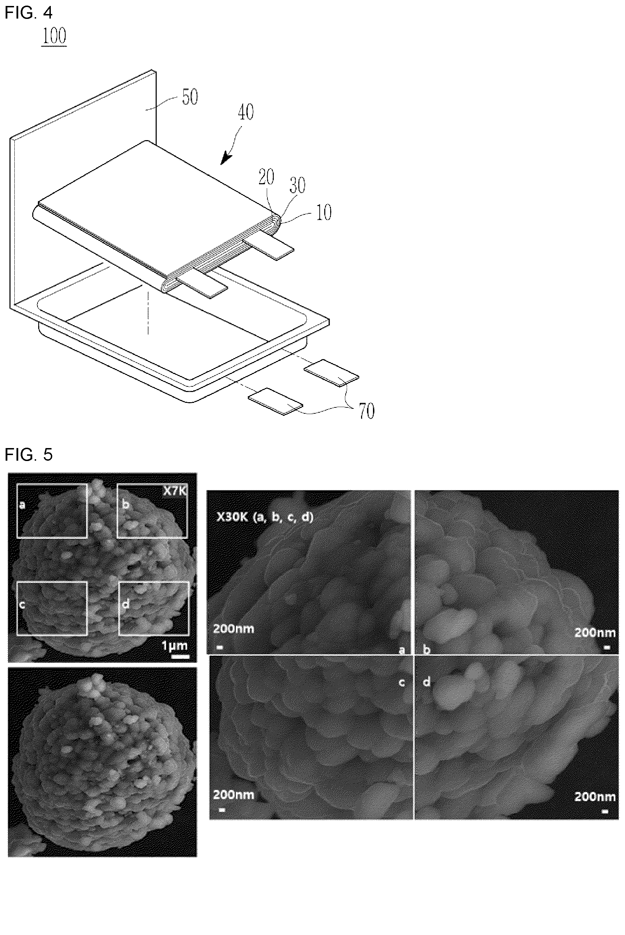

The rechargeable lithium battery may be classified into cylindrical, prismatic, pouch, coin, and the like, depending on the shape thereof. FIGS. 1 to 4 are schematic diagrams illustrating the rechargeable lithium battery according to some example embodiments, where FIG. 1 is a cylindrical battery, FIG. 2 is a prismatic battery, and FIGS. 3 and 4 are a pouch-shaped battery. Referring to FIGS. 1 to 4, the rechargeable lithium battery 100 includes an electrode assembly 40 with a separator 30 interposed between the positive electrode 10 and the negative electrode 20, and a case 50 in which the electrode assembly 40 is housed. The positive electrode 10, the negative electrode 20, and the separator 30 may be impregnated with an electrolyte solution (not shown). The rechargeable lithium battery 100 may include a sealing member 60 that seals the case 50 as shown in FIG. 1. Additionally, in FIG. 2, the rechargeable lithium battery 100 may include a positive electrode lead tab 11, a positive electrode terminal 12, a negative lead tab 21, and a negative electrode terminal 22. As shown in FIGS. 3 and 4, the rechargeable lithium battery 100 includes an electrode tab 70 illustrated in FIG. 4, that is, a positive electrode tab 71 and a negative electrode tab 72 illustrated in FIG. 3 that constitute an electrical path for inducing the current formed in the electrode assembly 40 to the outside.

## Negative Electrode

The negative electrode may include a current collector and a negative electrode active material layer on the current collector, and the negative electrode active material layer may include a negative electrode active material, and may further include a binder, a conductive material, or a combination thereof.

### Negative Electrode Active Material

The negative electrode active material may include a material that reversibly intercalates/deintercalates lithium ions, a lithium metal, a lithium metal alloy, a material capable of doping/dedoping lithium, or a transition metal oxide.

The material that reversibly intercalates/deintercalates lithium ions may include, for example crystalline carbon, amorphous carbon, or a combination thereof as a carbon-based negative electrode active material. The crystalline carbon may be irregular, or have the shape of a sheet, a flake, may have a spherical shape, or a fiber shape of natural graphite or artificial graphite. The amorphous carbon may be or include a soft carbon, a hard carbon, a mesophase pitch carbonization product, calcined coke, and the like.

The lithium metal alloy includes an alloy of lithium and a metal such as at least one of Na, K, Rb, Cs, Fr, Be, Mg, Ca, Sr, Si, Sb, Pb, In, Zn, Ba, Ra, Ge, Al, and Sn.

The material capable of doping/dedoping lithium may be a Si-based negative electrode active material or a Sn-based negative electrode active material. The Si-based negative electrode active material may include silicon, a silicon-carbon composite, $SiO_x$ (0 < x < 2), a Si-Q alloy (wherein Q is or includes an element such as at least one of an alkali metal, an alkaline-earth metal, a Group 13 element, a Group 14 element (excluding Si), a Group 15 element, a Group 16 element, a transition metal, a rare earth element, and a combination thereof, for example Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Tl, Ge, P, As, Sb, Bi, S, Se, Te, Po, and a combination thereof), or a combination thereof. The Sn-based negative electrode active material may be or include Sn, $SnO_2$, a Sn alloy, or a combination thereof.

The silicon-carbon composite may be or include a composite of silicon and amorphous carbon. An average particle diameter ($D_{50}$) of the silicon-carbon composite particles may be, for example, about 0.5 μm to about 20 μm. According to some example embodiments, the silicon-carbon composite may be in the form of silicon particles and amorphous carbon coated on the surface of the silicon particles. For example, the silicon-carbon composite may include a secondary particle (core) in which silicon primary particles are assembled and an amorphous carbon coating layer (shell) on the surface of the secondary particle. The amorphous carbon may also be present between the silicon primary particles, for example, the silicon primary particles may be coated with amorphous carbon. The secondary particles may be dispersed in an amorphous carbon matrix.

The silicon-carbon composite may further include crystalline carbon. For example, the silicon-carbon composite may include a core including crystalline carbon and silicon particles, and an amorphous carbon coating layer on the surface of the core. The crystalline carbon may be or include artificial graphite, natural graphite, or a combination thereof. The amorphous carbon may include soft carbon or hard carbon, a mesophase pitch carbonized product, and calcined coke.

When the silicon-carbon composite includes silicon and amorphous carbon, a silicon content may be about 10 wt% to about 50 wt% and a content of amorphous carbon may be about 50 wt% to about 90 wt% based on 100 wt% of the silicon-carbon composite. In addition, when the composite includes silicon, amorphous carbon, and crystalline carbon, a silicon content may be about 10 wt% to about 50 wt%, a content of crystalline carbon may be about 10 wt% to about 70 wt%, and a content of amorphous carbon may be about 20 wt% to about 40 wt% based on 100 wt% of the silicon-carbon composite.

Additionally, a thickness of the amorphous carbon coating layer may be about 5 nm to about 100 nm. An average particle diameter ($D_{50}$) of the silicon particles (primary particles) may be about 10 nm to about 1 $\mu$m, or about 10 nm to about 200 nm. The silicon particles may be present as silicon alone, in the form of a silicon alloy, or in an oxidized form. The oxidized form of silicon may be represented by $SiO_x$ (0<x<2). At this time, the atomic content ratio of Si:O, which indicates a degree of oxidation, may be about 99:1 to about 33:67. As used herein, when a definition is not otherwise provided, an average particle diameter ($D_{50}$) indicates a particle where a cumulative volume is about 50 volume% in a particle distribution.

The Si-based negative electrode active material or Sn-based negative electrode active material may be mixed with the carbon-based negative electrode active material. When the Si-based negative electrode active material or Sn-based negative electrode active material and the carbon-based negative electrode active material are mixed and used, the mixing ratio may be a weight ratio of about 1:99 to about 90:10.

Binder

The binder is configured to sufficiently adhere the negative electrode active material particles to each other, and to sufficiently adhere the negative electrode active material to the current collector. The binder may be or include a non-aqueous binder, an aqueous binder, a dry binder, or a combination thereof.

The non-aqueous binder may include at least one of polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, polyamideimide, polyimide, or a combination thereof.

The aqueous binder may include at least one of a styrene-butadiene rubber, a (meth)acrylated styrene-butadiene rubber, a (meth)acrylonitrile-butadiene rubber, a (meth)acrylic rubber, a butyl rubber, a fluorine rubber, polyethylene oxide, polyvinylpyrrolidone, polyepichlorohydrin, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resin, polyvinyl alcohol, or a combination thereof.

When an aqueous binder is used as the negative electrode binder, a cellulose-based compound capable of imparting viscosity may be further included. As the cellulose-based compound, one or more of carboxymethyl cellulose, hydroxypropylmethyl cellulose, methyl cellulose, or alkali metal salts thereof may be mixed and used. The alkali metal may be or include Na, K, or Li.

The dry binder may be a polymer material capable of becoming fiber, and may be or include, for example, polytetrafluoroethylene, polyvinylidene fluoride, a polyvinylidene fluoride-hexafluoropropylene copolymer, polyethylene oxide, or a combination thereof.

Conductive Material

The conductive material may be included to provide electrode conductivity, and any electrically conductive material may be used as a conductive material unless the electrically conductive material causes a chemical change in the battery. Examples of the conductive material include a carbon-based material such as at least one of natural graphite, artificial graphite, carbon black, acetylene black, ketjen black, a carbon fiber, a carbon nanofiber, a carbon nanotube, and the like; a metal-based material of a metal powder or a metal fiber including at least one of copper, nickel, aluminum silver, and the like; a conductive polymer such as, e.g., a polyphenylene derivative; or a mixture thereof.

A content of the negative electrode active material may be about 95 wt% to about 99.5 wt% based on 100 wt% of the negative electrode active material layer, and a content of the binder may be about 0.5 wt% to about 5 wt% based on 100 wt% of the negative electrode active material layer. For example, the negative electrode active material layer may include about 90 wt% to about 99 wt% of the negative electrode active material, about 0.5 wt% to about 5 wt% of the binder, and about 0.5 wt% to about 5 wt% of the conductive material.

Current Collector

The negative electrode current collector may include, for example, indium (In), copper (Cu), magnesium (Mg), stainless steel, titanium (Ti), iron (Fe), cobalt (Co), nickel (Ni), zinc (Zn), aluminum (Al), germanium (Ge), lithium (Li), or an alloy thereof, and may be in the form of a foil, sheet, or foam. A thickness of the negative electrode current collector may be, for example, about 1 $\mu$m to about 20 $\mu$m, about 5 $\mu$m to about 15 $\mu$m, or about 7 $\mu$m to about 10 $\mu$m.

**Electrolyte**

For example, the electrolyte for a rechargeable lithium battery may be or include an electrolyte solution, which may include a non-aqueous organic solvent and a lithium salt.

The non-aqueous organic solvent may constitute a medium for transmitting ions taking part in the electrochemical reaction of a battery. The non-aqueous organic solvent may be or include a carbonate-based, ester-based, ether-based, ketone-based, or alcohol-based solvent, an aprotic solvent, or a combination thereof.

The carbonate-based solvent may include at least one of dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and the like. The ester-based solvent may include at least one of methyl acetate, ethyl acetate, n-propyl acetate, dimethyl acetate, methyl propionate, ethyl propionate, decanolide, mevalonolactone, valerolactone, caprolactone, and the like. The ether-based solvent may include at least one of dibutyl ether, tetraglyme, diglyme, dimethoxyethane, 2-methyltetrahydrofuran, 2,5-dimethyltetrahydrofuran, tetrahydrofuran, and the like. In addition, the ketone-based solvent may include cyclohexanone, and the like. The alcohol-based solvent may include ethanol, isopropyl alcohol, and the like and the aprotic solvent may include nitriles such as R-CN (wherein R is a C2 to C20 a linear, branched, or cyclic hydrocarbon group, a double bond, an aromatic ring, or an ether group, and the like; amides such as dimethylformamide; dioxolanes such as 1,3-dioxolane, 1,4-dioxolane, and the like; sulfolanes, and the like).

The non-aqueous organic solvent can be used alone or in a mixture of two or more solvents, and when two or more non-aqueous organic solvent are used in a mixture, a mixing ratio can be appropriately adjusted according to the desired battery performance, which is typically known to those skilled in the field.

When using a carbonate-based solvent, a cyclic carbonate and a chain carbonate may be mixed and used, and the cyclic carbonate and the chain carbonate may be mixed in a volume ratio of about 1:1 to about 1:9.

The non-aqueous organic solvent may further include an aromatic hydrocarbon-based organic solvent. For example, a carbonate-based solvent and an aromatic hydrocarbon-based organic solvent may be mixed and used in a volume ratio of about 1:1 to about 30:1.

The electrolyte solution may further include vinylethyl carbonate, vinylene carbonate, or an ethylene carbonate-based compound to improve battery cycle-life.

Examples of the ethylene carbonate-based compound may include at least one of fluoroethylene carbonate, difluoroethylene carbonate, chloroethylene carbonate, dichloroethylene carbonate, bromoethylene carbonate, dibromoethylene carbonate, nitroethylene carbonate, and cyanoethylene carbonate.

The lithium salt dissolved in the organic solvent at least one of supplies lithium ions in a battery, enables a basic operation of a rechargeable lithium battery, and improves transportation of the lithium ions between positive and negative electrodes. Examples of the lithium salt may include at least one of $LiPF_6$, $LiBF_4$, $LiSbF_6$, $LiAsF_6$, $LiClO_4$, $LiAlO_2$, $LiAlCl_4$, $LiPO_2F_2$, LiCl, LiI, $LiN(SO_3C_2F_5)_2$, $Li(FSO_2)_2N$ (lithium bis(fluorosulfonyl) imide; LiFSI), $LiC_4F_9SO_3$, $LiN(C_xF_{2x+1}SO_2)$ $(C_yF_{2y+1}SO_2)$ (wherein x and y are integers of 1 to 20), lithium trifluoromethane sulfonate, lithium tetrafluoroethane sulfonate, lithium difluorobis(oxalato) phosphate (LiDFOB), and lithium bis(oxalato) borate (LiBOB).

A concentration of lithium salt may be within the range of about 0.1 M to about 2.0 M. When the concentration of lithium salt is within the above range, the electrolyte solution has appropriate ionic conductivity and viscosity, and thus improved or desired performance can be achieved, and lithium ions can move effectively.

**Separator**

Depending on the type of rechargeable lithium battery, a separator may be present between the positive electrode and the negative electrode. The separator may include at least polyethylene, polypropylene, polyvinylidene fluoride, or a multilayer film of two or more layers thereof, and a mixed multilayer film such as at least one of a polyethylene/polypropylene two-layer separator, polyethylene/polypropylene/polyethylene three-layer separator, polypropylene/polyethylene/polypropylene three-layer separator, and the like.

The separator may include a porous substrate and a coating layer including at least an organic material, an inorganic material, or a combination thereof on one or both surfaces of the porous substrate.

The porous substrate may be or include a polymer film formed of or including any one polymer such as a polyolefin that is or includes at least one of polyethylene and polypropylene, polyester such as polyethylene terephthalate and polybutylene terephthalate, polyacetal, polyamide, polyimide, polycarbonate, polyether ketone, polyarylether ketone, polyether ketone, polyetherimide, polyamideimide, polybenzimidazole, polyethersulfone, polyphenylene oxide, a cyclic olefin copolymer, polyphenylene sulfide, polyethylene naphthalate, a glass fiber, TEFLON, and polytetrafluoroethylene, or a copolymer or mixture of two or more thereof.

The porous substrate may have a thickness of about 1 μm to about 40 μm, for example, about 1 μm to about 30 μm, about 1 μm to about 20 μm, about 5 μm to about 15 μm, or about 10 μm to about 15 μm.

The organic material may include a (meth)acrylic copolymer including a first structural unit derived from (meth)acrylamide, and a second structural unit including at least one of a structural unit derived from (meth)acrylic acid or (meth)acrylate, and a structural unit derived from (meth)acrylamidosulfonic acid or a salt thereof.

The inorganic material may include inorganic particles such as at least one of $Al_2O_3$, $SiO_2$, $TiO_2$, $SnO_2$, $CeO_2$, MgO, NiO, CaO, GaO, ZnO, $ZrO_2$, $Y_2O_3$, SrTiOs, BaTiOs, $Mg(OH)_2$, boehmite, and a combination thereof, but is not limited thereto. An average particle diameter ($D_{50}$) of the inorganic particles may be about 1 nm to about 2000 nm, for example, about 100 nm to about 1000 nm, or about 100 nm to about 700 nm.

The organic material and the inorganic material may be mixed in one coating layer, or a coating layer including an organic material and a coating layer including an inorganic material may be stacked.

The thickness of the coating layer may be about 0.5 $\mu$m to about 20 $\mu$m, for example, about 1 $\mu$m to about 10 $\mu$m, or about 1 $\mu$m to about 5 $\mu$m.

Examples and comparative examples of the present disclosure are described below. However, the following examples are only examples of the present disclosure, and the present disclosure is not limited to the following examples.

## Example 1

### 1. Preparation of Positive Electrode Active Material

#### (1) Preparation of Porous Graphene

An etchant, KOH, was dissolved in a solvent of distilled water to prepare a 5 M KOH solution as an etching solution. Subsequently, 4 g of graphene oxide powder was added to the etching solution and subsequently mixed by spin-mixing for 24 hours to perform a surface treatment. The surface-treated graphene was filtered and dried, and subsequently heat-treated at 800 °C for 1 hour under an atmosphere of 95 volume% of nitrogen and 5 volume% of hydrogen, manufacturing porous graphene. The obtained porous graphene was measured with respect to a BET specific surface area by using a BET (Brunauer-Emmett-Teller) equipment, and the BET specific surface area result was in a range of 15 m2/g to 30 m2/g.

#### (2) Preparation of Particles Including Lithium Transition Metal Composite Oxide

As metal raw materials, nickel sulfate ($NiSO_4 \cdot 6H_2O$), cobalt sulfate ($CoSO_4 \cdot 7H_2O$), and manganese sulfate ($MnSO_4 \cdot H_2O$) in a molar ratio of 95:4:1 were dissolved in distilled water as a solvent to prepare a mixed solution, and in order to form a complex compound, ammonia water ($NH_4OH$) and sodium hydroxide (NaOH) as a precipitant were prepared.

After adding the diluted ammonia water solution to a continuous reactor, the mixed solution of the metal raw material was continuously added thereto, and the sodium hydroxide was added thereto to maintain pH inside the reactor. When a reaction slowly proceeded for about 78 hours and became stabilized, a product overflowing therefrom was collected and subsequently washed and dried to obtain a final precursor. Accordingly, a nickel-based hydroxide ($Ni_{0.95}Co_{0.04}Mn_{0.01}(OH)_2$) in the form of secondary particles, in which primary particles were agglomerated, was obtained therefrom and subsequently washed and dried.

The nickel-based hydroxide was mixed with LiOH to have 1.04 of a lithium molar ratio to total metals of the nickel-based hydroxide and subsequently heat-treated at about 750 °C for 15 hours under an oxygen atmosphere, obtaining lithium nickel-based composite oxide particles ($LiNi_{0.95}Co_{0.04}Mn_{0.01}O_2$). The obtained lithium nickel-based composite oxide was in the form of secondary particles with an average particle diameter of about 9.5 $\mu$m, in which primary particles were agglomerated.

#### (3) Coating of Porous Graphene

The obtained porous graphene was added to a DMF solution at a concentration of 1 wt% and subsequently subjected to an ultrasonic wave dispersion treatment by using a tip sonotrode equipment, preparing a porous graphene-containing dispersion. 3 g of the obtained dispersion and 3 g of the lithium nickel-based composite oxide particles ($LiNi_{0.95}Co_{0.04}Mn_{0.01}O_2$) were mixed to prepare a mixed solution, and the mixed solute was added to a conical tube and subsequently mixed by rotating through a vortex at room temperature for 2 minutes and washed by using ethanol at an amount 10 times the amount of the lithium nickel-based composite oxide particles. Subsequently, a positive electrode active material having a porous graphene coating layer formed on the surface of the lithium nickel-based composite oxide particle was manufactured by performing separation with a centrifuge at 3000 rpm and drying at 80 °C under a vacuum atmosphere.

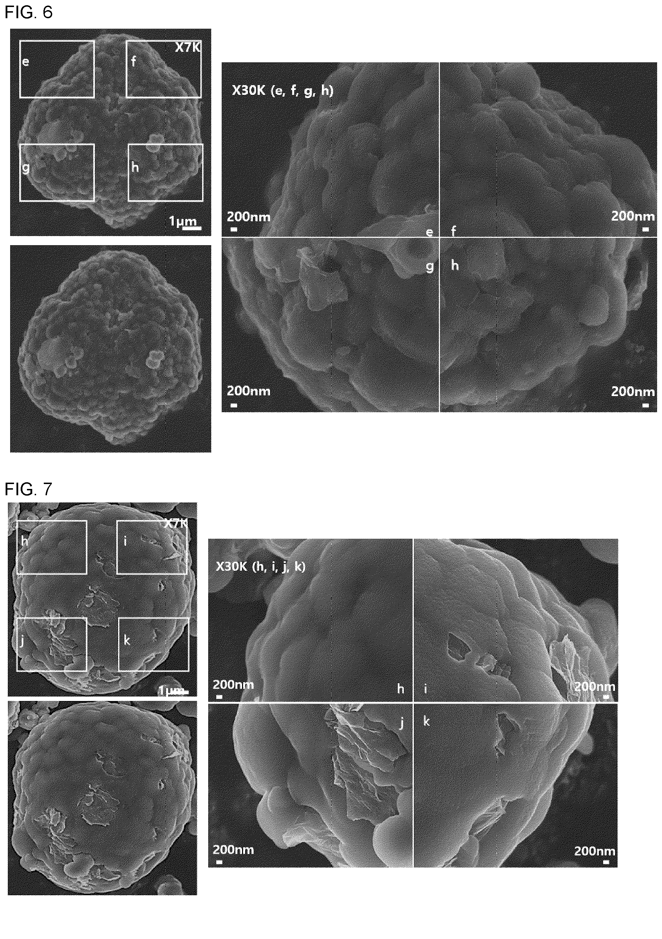

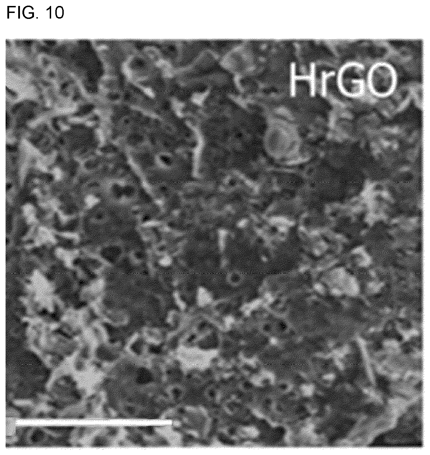

Images of the prepared positive electrode active material particles were taken at ×7,000 magnification and at ×30,000 magnification with SEM, and in addition, the image is shown in FIG. 7, and an image of the positive electrode active material surface was taken with SEM, and the image is shown in FIG. 10.

Referring to FIGS. 7 and 10, on the surface of the positive electrode active material of Example 1, a porous graphene shape in which a plurality of pores with a pore distance of 30 nm to 5 μm was formed. Accordingly, the positive electrode active material of Example 1 was confirmed to have the porous graphene coating layer formed on the lithium nickel-based composite oxide particles.

### 2. Manufacturing of Rechargeable Lithium Battery Cells

A positive electrode was manufactured by mixing 99.5 wt% of the positive electrode active material and 0.5 wt% of a polyvinylidene fluoride binder without a conductive material to prepare positive electrode slurry, coating the positive electrode slurry on an aluminum foil current collector, and drying the positive electrode slurry, and compressing the positive electrode slurry to have a density of 4.0 g/cc with a press.

A negative electrode slurry was prepared by mixing 97.5 wt% of graphite negative electrode active material, 1.5 wt% of carboxymethyl cellulose, and 1 wt% of styrene butadiene rubber in a water solvent. The negative electrode slurry was coated on a copper foil current collector, dried, and pressed, manufacturing a negative electrode.

The positive and negative electrodes were used with a polytetrafluoroethylene separator and an electrolyte solution prepared by dissolving 1 M $LiPF_6$ in a mixed solvent of ethylene carbonate and dimethyl carbonate in a volume ratio of 3:7 to manufacture a rechargeable lithium battery cell in a common method.

### Comparative Example 1

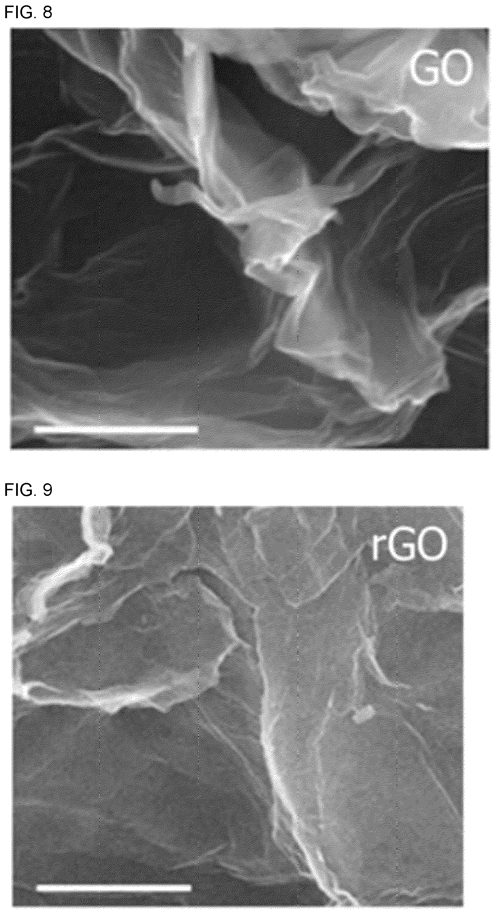

A positive electrode active material was prepared substantially in the same manner as in Example 1 except that lithium nickel-based composite oxide particles ($LiNi_{0.95}Co_{0.04}Mn_{0.01}O_2$) themselves were used as the positive electrode active material without using the porous graphene. Images of the cross-section of the prepared positive electrode active material were taken at a magnification of ×7,000 and at a magnification of ×30,000 with SEM, the image is shown in FIG. 5, and an image of the surface of the positive electrode active material was taken with SEM, and the image is shown in FIG. 8.

In addition, a rechargeable lithium battery cell was manufactured in the same manner as in Example 1 with a difference that a positive electrode was manufactured to have density of 3.2 g/cc by mixing 98 wt% of the lithium nickel-based composite oxide particles ($LiNi_{0.95}Co_{0.04}Mn_{0.01}O_2$), 1 wt% of denka black as a conductive material, and 1 wt% of a polyvinylidene fluoride binder to prepare positive electrode slurry.

### Comparative Example 2

A positive electrode active material and a rechargeable lithium battery cell were manufactured substantially in the same manner as in Example 1 with a difference that graphene reduced by heat-treating graphene oxide at 800 °C for 1 hour instead of the porous graphene was coated on the surface of the lithium nickel-based composite oxide particles ($LiNi_{0.95}Co_{0.04}Mn_{0.01}O_2$). Accordingly, positive electrode active material slurry had 99.5 wt% of the positive electrode active material, and a positive electrode manufactured therefrom had a density of 4.0 g/cc.

In addition, Images of a cross-section of the prepared positive electrode active material according to Comparative Example 2 were taken at a magnification of ×7,000 and at a magnification of ×30,000 with SEM, the image is shown in FIG. 6, and an image of the surface of the positive electrode active material was taken with SEM, and the image is shown in FIG. 9.

Referring to FIGS. 6 and 9, in the positive electrode active material of Comparative Example 2, unlike in Example 1, there were no pores in the graphene coating layer on the surface of the lithium nickel-based composite oxide particle.

### Evaluation Example 1: Raman Spectrum

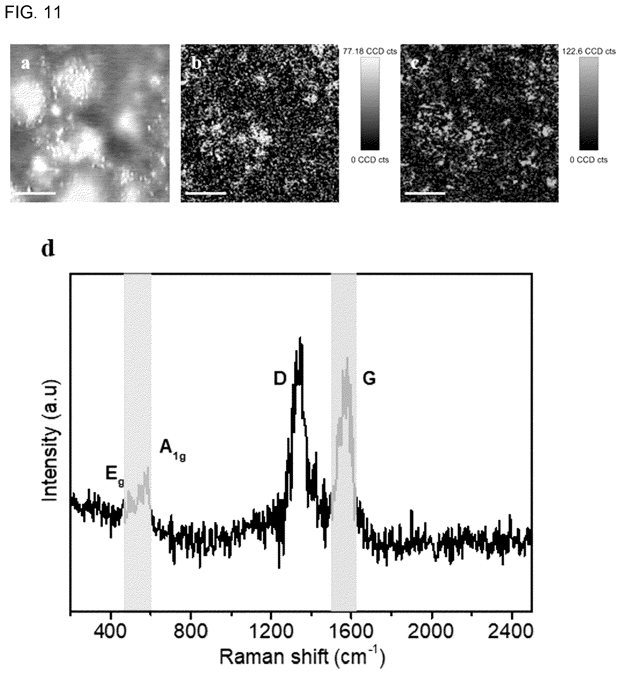

FIG. 11 shows the Raman spectrum analysis results for the positive electrode active material manufactured in Example 1. Referring to FIG. 11, the positive electrode active material exhibited a D band peak at 1350 $cm^{-1}$ and a G band peak at 1590 $cm^{-1}$, which came from the porous graphene. In addition, the positive electrode active material exhibited an $E_g$ band peak at 475 to 530 $cm^{-1}$ and an $A_{1g}$ band peak at 550 to 560 $cm^{-1}$ due to the lithium nickel-based composite oxide particles. Accordingly, the positive electrode active material of Example 1 exhibited that the porous graphene was coated on the surface of the lithium nickel-based composite oxide particle.

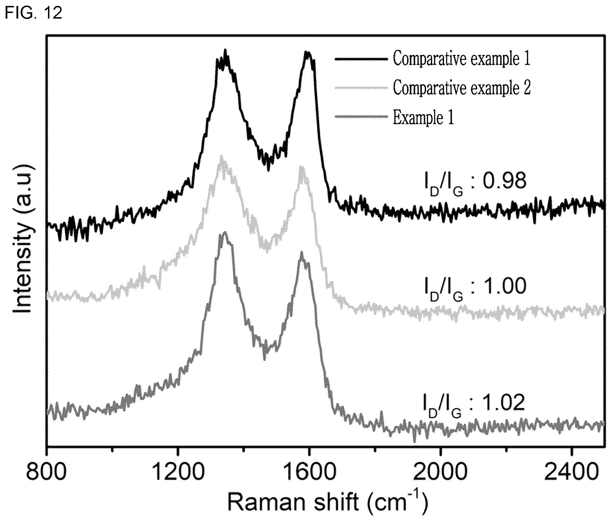

In addition, each Raman spectrum analysis result of the positive electrode active materials according to Example 1 and Comparative Examples 1 and 2 is shown in FIG. 12. Specifically, in the Raman spectrum analysis, peak intensity ($I_D$) around 1350 $cm^{-1}$, peak intensity ($I_G$) around 1580 $cm^{-1}$, and a peak intensity ratio ($I_D/I_G$) are shown in FIG. 12, wherein the positive electrode active material of Example 1 exhibited a $I_D/I_G$ ratio of 1.02, which was higher than each $I_D/I_G$ of the positive electrode active materials of Comparative Examples 1 and 2.

## Evaluation Example 2: Evaluation of Rate Discharge Capability

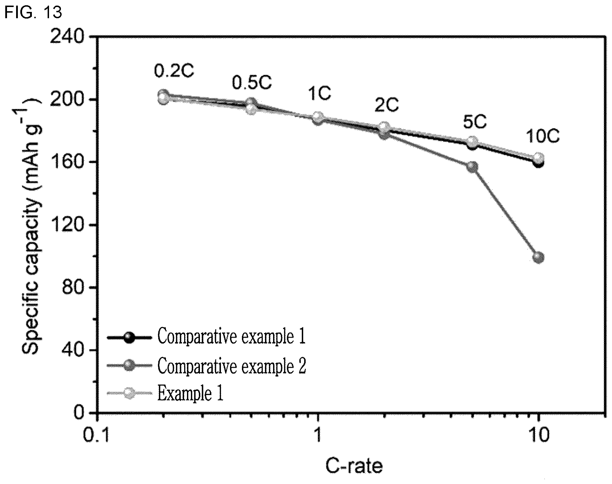

Each of the rechargeable lithium battery cells of Example 1 and Comparative Examples 1 and 2 was charged and discharged at a charge c rage of 0.2 C within a range of 2.75 V to 4.3 V and a cut-off c rate of 0.05 C to evaluate discharge capacity at each rate of 0.2 C, 0.5 C, 1 C, 2 C, 5 C, and 10 C, and the results are shown in FIG. 13.

Referring to FIG. 13, Example 1 exhibited high discharge capacity at almost all C rates. On the contrary, Comparative Example 2 exhibited significantly deteriorated discharge capacity at a higher rate of 2 C or more.

## Evaluation Example 3: Cyclic Voltametric (CV) Analysis of Positive Electrode

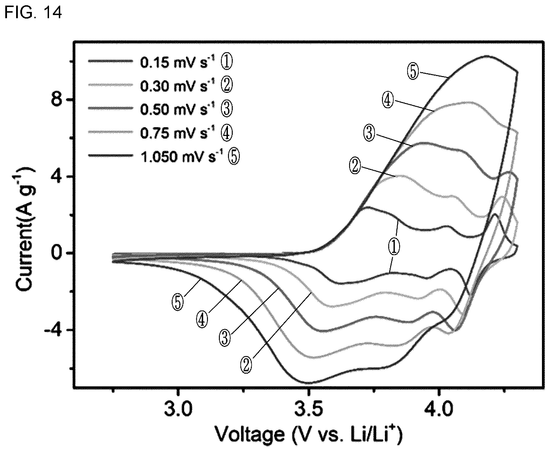

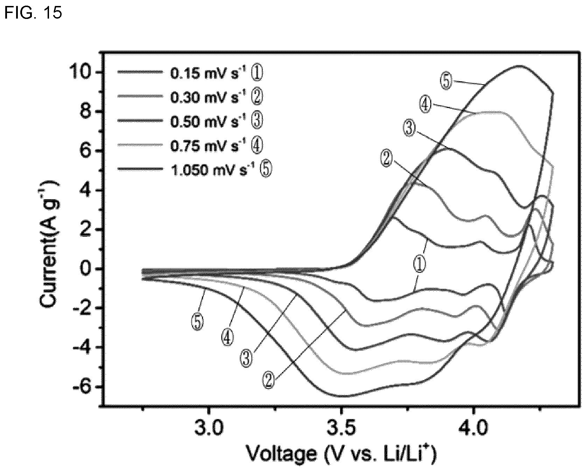

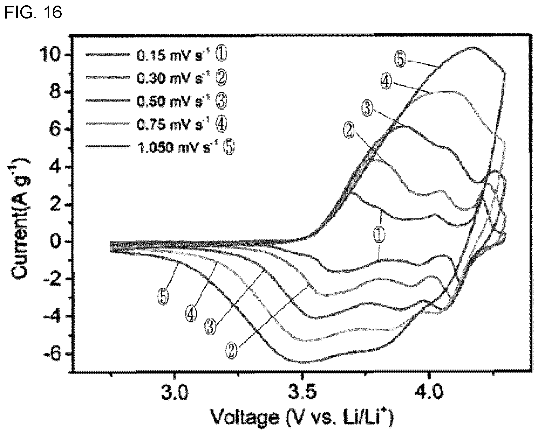

Cyclic voltammetry (CV) graphs of the positive electrodes according to Example 1 and Comparative Examples 1 and 2 are respectively shown in FIGS. 14, 15 and 16.

The measurement was performed by using a three-electrode electrochemical cell using a positive electrode as a work electrode and a lithium metal as a reference electrode and a counter electrode, scanning was cycled from 2.75 V to 4.3 V and from 4.3 V to 2.75 V at a scan rate of 0.15 mV/s, 0.30 mV/s, 0.50 mV/s, 0.75 mV/s, and 1.050 mV/s.

Referring to FIGS. 14 to 16, compared with Comparative Example 1 using a conductive material in addition to the positive electrode active material, as for Example 1, which used no conductive material in addition to the positive electrode active material, an oxidation·reduction reaction stably occurred at the same voltage.

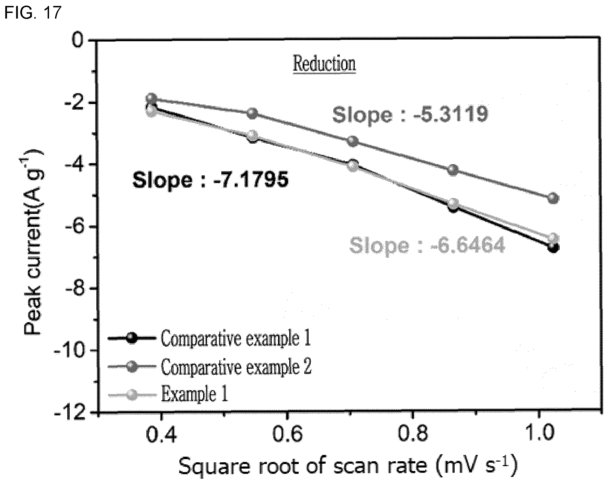

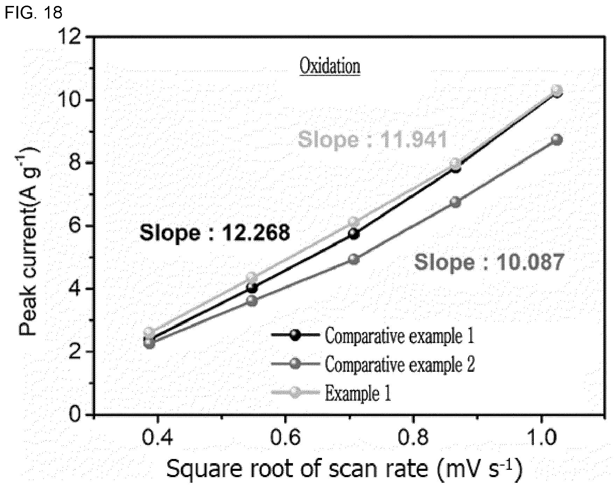

In addition, as a result of analyzing the CV graphs of the positive electrodes of Example 1 and Comparative Examples 1 and 2, a square root of a peak current to a scan rate during the reduction is plotted as a graph in FIG. 17, and a square root of a peak current to a scan rate during the oxidation is plotted as a graph in FIG. 18.

Referring to FIGS. 17 and 18, a peak current, which was proportional to diffusion of $Li^+$ at a specific scan rate as expressed by the Randle-Sevcik equation, was improved in Example 1 to an equal or higher level than in Comparative Examples 1 and 2.

Accordingly, in Example 1, in which a coating layer including porous graphene was formed on the surface of the lithium nickel-based composite oxide particle by applying porous graphene as a coating layer material of a positive electrode active material, a conductive material used in a process of manufacturing a positive electrode was less or not used, wherein even though the amount of the conductive material was less or not used, sufficient electrode performance was achieved.

## Evaluation Example 4: EIS Measurement Result

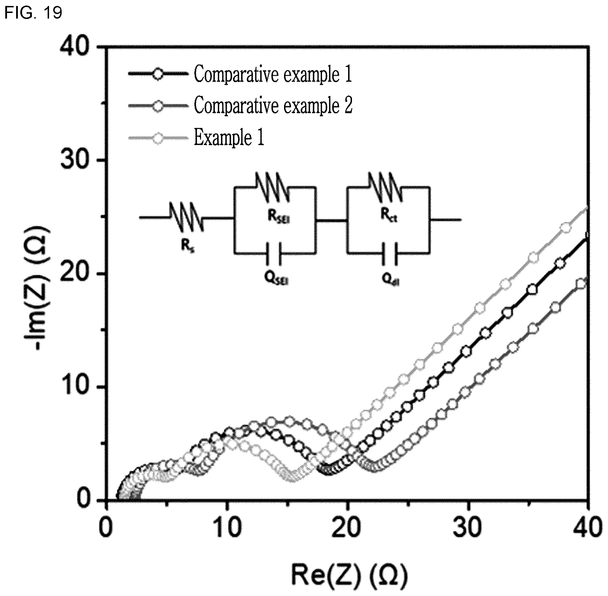

The rechargeable lithium battery cells according to Example 1 and Comparative Examples 1 and 2 were measured with respect to electrochemical electrochemical impedance spectroscopy (EIS) by using a potentiostat equipment. The EIS results are shown in FIGS. 19 to 21, wherein the charging was performed within a range of 2.75 V to 4.3 V at a charge c rate of 0.2C and a cut-off c rate of 0.05 C.

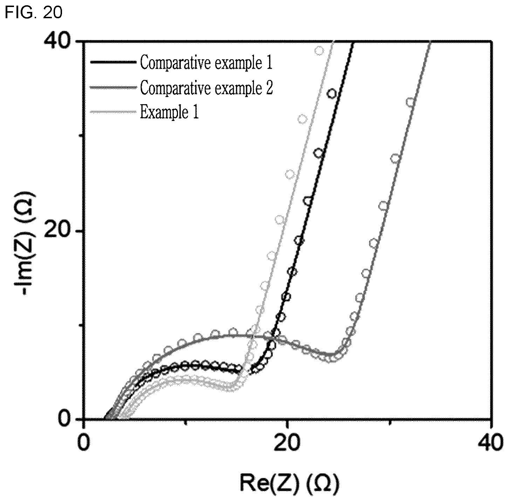

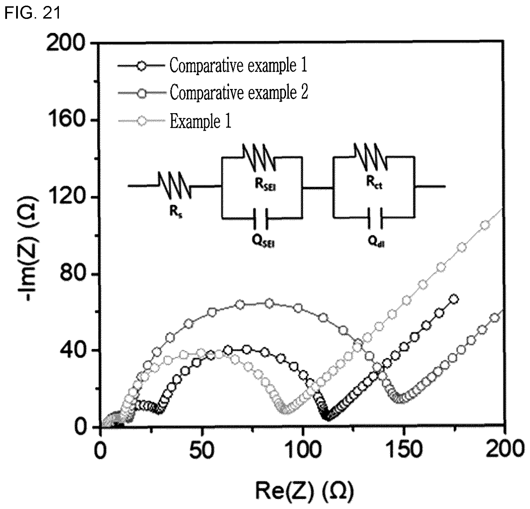

FIG. 19 illustrates measurements of the initial impedance of the rechargeable lithium battery cells manufactured in Example 1 and Comparative Examples 1 and 2 at room temperature (25 °C). FIG. 20 illustrates the impedance measurement results of symmetric cells for the rechargeable lithium battery cells manufactured in Example 1 and Comparative Examples 1 and 2. FIG. 21 illustrates the impedance measurement results of the rechargeable lithium battery cells manufactured in Example 1 and Comparative Examples 1 and 2 after 50 cycles.

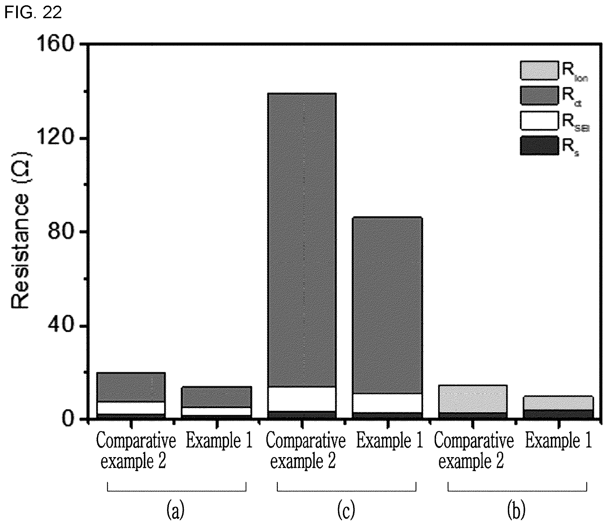

Referring to the impedance measurement results of FIGS. 19 to 21, the impedance resistance results of the rechargeable lithium battery cells of Example 1 and Comparative Example 2 are summarized in FIG. 22. In other words, the impedance resistance results of Example 1 and Comparative Example 2 are respectively provided in (a), which comparatively shows the initial impedance results of FIG. 19, in (b), which comparatively shows impedance results of the symmetrical cells of FIG. 20, and in (c), which comparatively shows of impedance results after 50 cycles of FIG. 21.

Referring to FIGS. 19 to 21, because a diameter of a semicircle in EIS graphs represents interface resistance of positive and negative electrodes, the rechargeable lithium battery cell of Example 1 was confirmed to have the most improved or desired resistance reduction or suppression effect.

In addition, referring to FIG. 22, Example 1 in which porous graphene was used as a coating layer material of a positive electrode active material, exhibited improved or desired resistance reduction or suppression effect, compared with Comparative Example 2.

## Evaluation Example 5: XPS Measurement Result

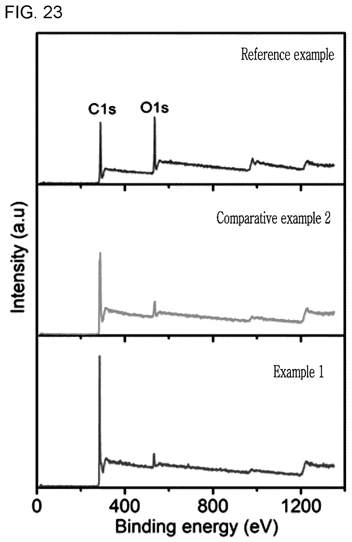

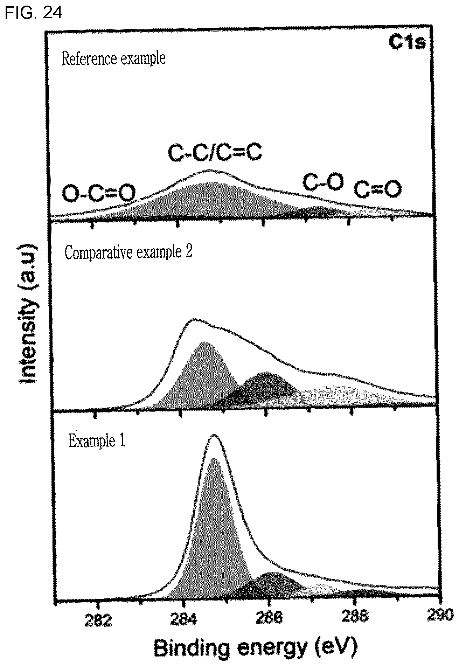

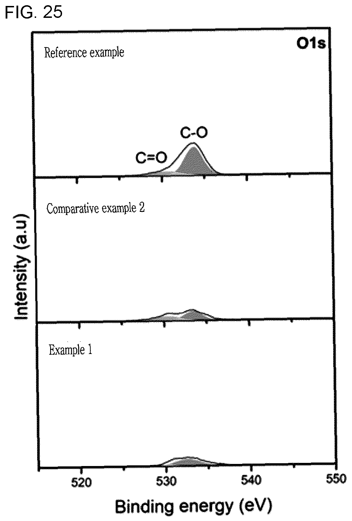

Graphene oxide was prepared as a reference example, and the XPS analysis results for each graphene used in the reference example, Example 1, and Comparative Example 2 are shown in FIG. 23. The XPS analysis results for the C1s peak in FIG. 23 are shown in FIG. 24, and the XPS analysis results for the O1s peak in FIG. 23 are shown in FIG. 25.

Referring to FIGS. 23 to 25, compared with graphene oxide of the reference example, the porous graphene used in Example 1 and the graphene used in Comparative Example 2 had an increased content of carbon (C). and a decreased content of oxygen (O). Accordingly, the porous graphene used in Example 1 and the graphene used in Comparative Example 2 were more reduced than the graphene oxide used in the reference example.

## Evaluation Example 6: FT-IR Analysis Results

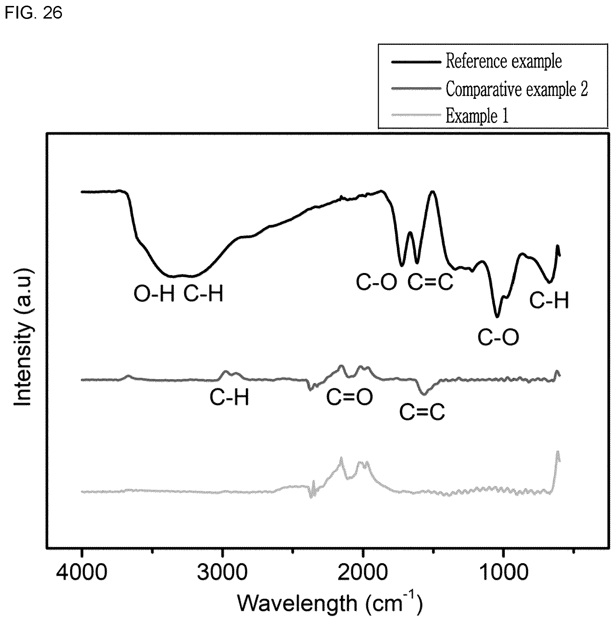

The FT-IR analysis results of the graphene oxide of the reference example and each graphene used in Example 1 and Comparative Example 2 are shown in FIG. 26. Referring to FIG. 26, compared with the graphene oxide of the reference example, the graphene used in Example 1 had a decreased amount of functional groups.

## Evaluation Example 7: Conductivity Evaluation

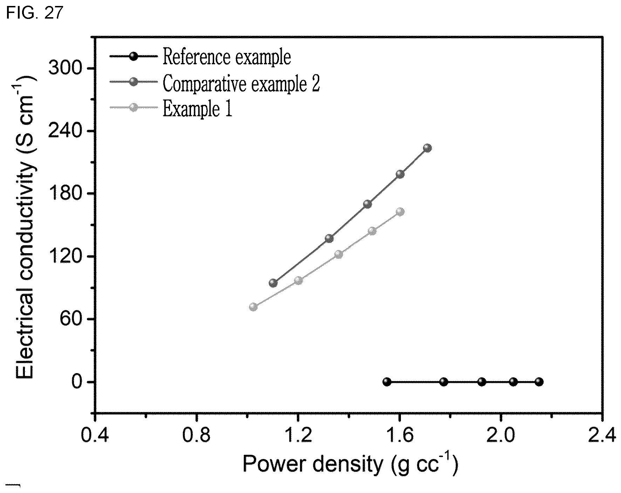

The graphene oxide of the reference example and each graphene of Example 1 and Comparative Example 2 were measured with respect to electrical conductivity changes according to density, which are shown in FIG. 27. Referring to FIG. 27, compared with the graphene oxide of the reference example, the graphene of Example 1 exhibited improved or desired electrical conductivity.

Accordingly, the reduction of graphene oxide was included in a process of manufacturing the porous graphene of Example 1, forming a coating layer including the porous graphene and resultantly, improving conductivity.

## Evaluation Example 8: Evaluation of Specific Surface Area and Pore Size

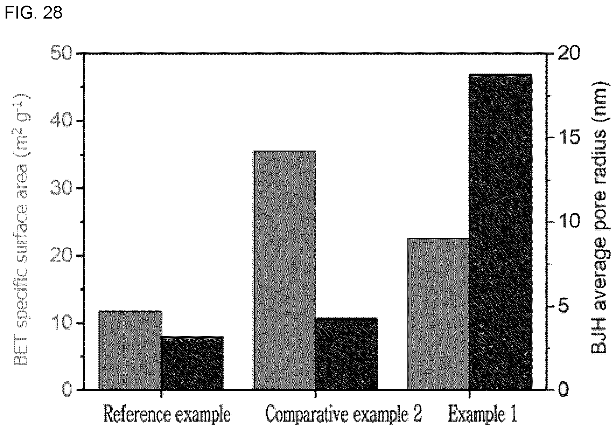

The graphene oxide of the reference example and each graphene used in Example 1 and Comparative Example 2 were analyzed with respect to a specific surface area and a pore size, and the results are shown in FIG. 28. Herein, the specific surface area was measured by using physical adsorption and chemical adsorption phenomena and a Brunauer-Emmett-Teller (BET) method. In other words, the specific surface area was obtained by measuring a weight of the prepared active material, absorbing nitrogen on the surface of the active material surface to measure an amount of absorbed nitrogen gas, and then, using BET Calculation Equation. In addition, the pore size was obtained by measuring an average pore radius in a Barret-Joyner-Halenda (BJH) method.

Referring to FIG. 28, the porous graphene used in Example 1 had a specific surface area of about 23 $m^2/g$, the graphene oxide of the reference example had a specific surface area of about 12 $m^2/g$, and the graphene used in Comparative Example 2 had a specific surface area of about 36 $m^2/g$. Accordingly, the specific surface area of the porous graphene used in Example 1 was larger than the specific surface area of the graphene oxide but smaller than the specific surface area of graphene used in Comparative Example 2.

In addition, the porous graphene used in Example 1 had an average pore radius(i.e., the value obtained by doubling the average pore radius represents the average diameter of pores) of about 18.5 nm, the graphene oxide of the reference example had had an average pore radius of about 3 nm, and the graphene used in Comparative Example 2 had an average pore radius of about 4 nm. Accordingly, the porous graphene used in Example 1 had the largest pore size.

## Evaluation Example 9: Evaluation of Rate Discharge Capability According to Changes in Stirring Time

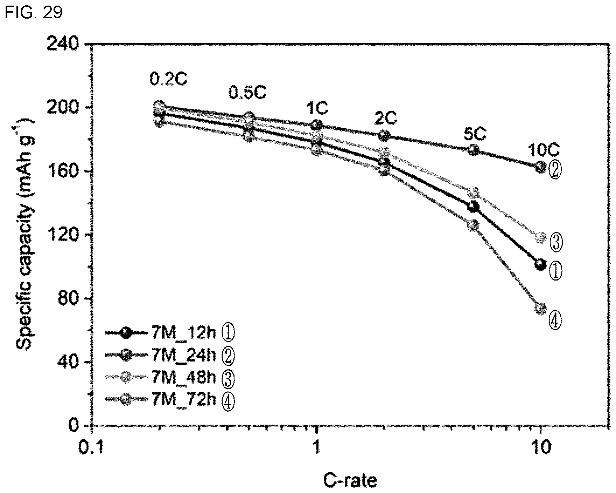

A positive electrode active material and a rechargeable lithium battery cell were manufactured substantially in the same manner as in Example 1, with a difference that the stirring time and the concentration of the etching solution in the manufacturing process of the porous graphene of Example 1 were changed, and the positive electrode active material and the rechargeable lithium battery cell were subsequently evaluated with respect to rate discharge capability substantially in the same manner as in Evaluation Example 2, and the results are shown in FIG. 29.

Referring to FIG. 29, improved or desired discharge capacity was secured at a c rate of less than 5 C regardless of the stirring time in the manufacturing process of the porous graphene. On the contrary, at a high rate of 5 C or more, only when stirred for 15 hours to 40 hours, improved or desired discharge capacity was secured.

## Evaluation Example 10: Evaluation of Rate Discharge Capability According to Changes in Concentration of Etching Solution

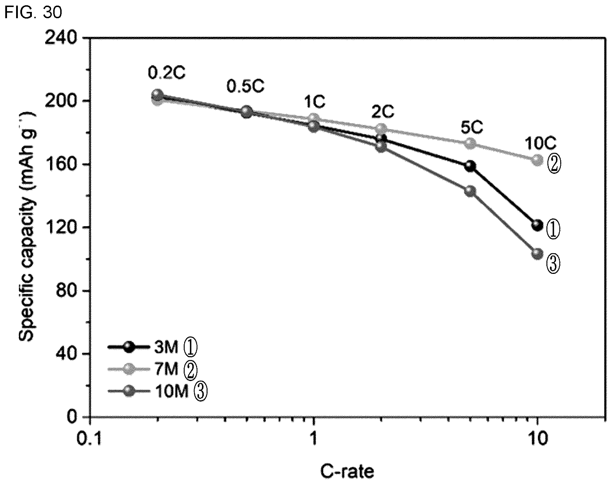

A positive electrode active material and a rechargeable lithium battery cell were manufactured substantially in the same manner as in Example 1, except that the concentration of the etching solution in the manufacturing process of the porous graphene of Example 1 was changed, and were subsequently evaluated with respect to rate discharge capability substantially in the same manner as in Evaluation Example 2, and the results are shown in FIG. 30.

Referring to FIG. 30, improved or desired discharge capacity was secured at a c rate of less than 5 C regardless of the concentration in the manufacturing process of the porous graphene. On the contrary, at a high rate of 5 C or more, when the etching solution has a concentration of 3 M to 8 M, improved or desired discharge capacity was secured.

While this disclosure has been described in connection with what is presently considered to be practical example embodiments, it is to be understood that the invention is not limited to the disclosed embodiments. On the contrary, it is intended to cover various modifications and equivalent arrangements included within the spirit and scope of the appended claims.

### <Description of symbols>

| | | | |
|---|---|---|---|
| 100: | rechargeable lithium battery | 10: | positive electrode |
| 11: | positive electrode lead tab | 12: | positive terminal |
| 20: | negative electrode | 21: | negative electrode lead tab |
| 22: | negative terminal | 30: | separator |
| 40: | electrode assembly | 50: | case |
| 60: | sealing member | 70: | electrode tab |
| 71: | positive electrode tab | 72: | negative electrode tab |

**Claims**

1. A positive electrode active material comprising:

   particles including a lithium transition metal composite oxide; and
   a coating layer on a surface of the particles and including porous graphene.

2. The positive electrode active material as claimed in claim 1, wherein an average diameter of pores of the porous graphene is about 10 nm to about 1 $\mu$m.

3. The positive electrode active material as claimed in claim 1 or 2, wherein the porous graphene is included in an amount of about 0.05 wt% to about 3 wt% based on a total weight of the positive electrode active material and/or in an amount of about 60 wt% to about 100 wt% based on a total weight of the coating layer.

4. The positive electrode active material as claimed in any of the claims 1 to 3, wherein an average distance between pores of the porous graphene is about 30 nm to about 5 $\mu$m.

5. The positive electrode active material as claimed in any of the claims 1 to 4, wherein a BET specific surface area of the porous graphene is about 15 m$^2$/g to about 30 m$^2$/g.

6. The positive electrode active material as claimed in any of the claims 1 to 5, wherein the lithium transition metal composite oxide comprises a lithium nickel-based composite oxide, preferably represented by Chemical Formula 1 or 2:

   [Chemical Formula 1] $\quad\quad$ $Li_{a1}Ni_{x1}M^1_{y1}M^2_{z1}O_{2-b1}X_{b1}$

   wherein, in Chemical Formula 1, $0.9 \leq a1 \leq 1.8$, $0.3 \leq x1 \leq 1$, $0 \leq y1 \leq 0.7$, $0 \leq z1 \leq 0.7$, $0.9 \leq x1+y1+z1 \leq 1.1$, $0 \leq b1 \leq 0.1$, $M^1$ and $M^2$ independently comprise at least one of Al, B, Ba, Ca, Ce, Co, Cr, Fe, Mg, Mn, Mo, Nb, Si, Sr, Ti, V, W, and Zr, , and X comprises at least one of F, P, and S.

   [Chemical Formula 2] $\quad\quad$ $Li_{a2}Ni_{x2}Co_{y2}M^3_{z2}O_{2-b2}X_{b2}$

   wherein, in Chemical Formula 2, $0.9 \leq a2 \leq 1.8$, $0.3 \leq x2 < 1$, $0 < y2 \leq 0.7$, $0 \leq z2 \leq 0.7$, $0.9 \leq x2+y2+z2 \leq 1.1$, $0 \leq b2 \leq 0.1$, $M^3$ comprises at least one of Al, B, Ba, Ca, Ce, Cr, Fe, Mg, Mn, Mo, Nb, Si, Sr, Ti, V, W, and Zr, and X comprises at least one of F, P, S.

7. The positive electrode active material as claimed in any of the claims 1 to 6, wherein the lithium transition metal composite oxide has a layered structure.

8. The positive electrode active material as claimed in any of the claims 1 to 7, wherein the coating layer has an average thickness of about 0.3 nm to about 30 nm.

9. The positive electrode active material as claimed in any of the claims 1 to 8, wherein:

the particles including a lithium transition metal composite oxide are in the form of secondary particles made by agglomerating a plurality of primary particles, and
the particles of the positive electrode active material have an average particle diameter ($D_{50}$) of about 7 $\mu$m to about 25 $\mu$m.

10. The positive electrode active material as claimed in any of the claims 1 to 9, wherein Equation 1 is satisfied:

[Equation 1]

$$1.02 \leq I_D/I_G \leq 1.3$$

wherein, in Equation 1, $I_D$ represents a peak intensity around 1350 cm$^{-1}$ in Raman spectrum analysis, and $I_G$ represents a peak intensity around 1580 cm$^{-1}$ in Raman spectrum analysis.

11. A method of preparing a positive electrode active material, the method comprising:

preparing an etching solution in which an etchant is added to a first solvent,
adding graphene oxide powder to the etching solution and stirring the graphene oxide powder to prepare a mixed solution, preferably for about 12 to about 72 hours,
filtering and drying the mixed solution, and performing heat treatment of the mixed solution to obtain porous graphene,
adding the porous graphene to a second solvent and dispersing the porous graphene to prepare a dispersion, and
adding particles including a lithium transition metal composite oxide to the dispersion and mixing the particles and the dispersion.

12. The method as claimed in claim 11, wherein the heat treatment is performed in a reducing atmosphere and/or at a temperature of about 600 °C to about 1,000 °C and/or for about 30 minutes to about 5 hours.

13. The method as claimed in claim 11 or 12, wherein the etchant comprises a basic compound, preferably at least one of KOH and NaOH and/or a concentration of the etching solution is about 1 M to about 15 M.

14. A positive electrode (10), comprising:

a positive electrode current collector; and
a positive electrode active material layer on the positive electrode current collector,
wherein the positive electrode active material layer includes the positive electrode active material as claimed in any of the claims 1 to 10 and preferably does not include a conductive material, whereby preferably an electrode density of the positive electrode (10) is about 3.5 g/cc to about 4.7 g/cc.

15. A rechargeable lithium battery (100), comprising the positive electrode (10) as claimed in claim 14;

a negative electrode (20); and
an electrolyte.

FIG. 1

FIG. 2

FIG. 3

FIG. 4

FIG. 5

FIG. 6

FIG. 7

FIG. 8

FIG. 9

FIG. 10

FIG. 11

FIG. 12

FIG. 13

FIG. 14

FIG. 15

FIG. 16

FIG. 17

FIG. 18

FIG. 19

FIG. 20

FIG. 21

FIG. 22

FIG. 23

FIG. 24

FIG. 25

FIG. 26

FIG. 27

FIG. 28

FIG. 29

FIG. 30

Europäisches Patentamt

European Patent Office

Office européen des brevets

# EUROPEAN SEARCH REPORT

**Application Number**

EP 24 21 7975

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>A | EP 4 261 939 A1 (LG ENERGY SOLUTION LTD [KR]) 18 October 2023 (2023-10-18)<br>* paragraphs [0037], [0070], [0079], [0084], [0085]; claims 1-15; figures 5, 6; table 1 * | 1,3,6-8,<br>14,15<br>10 | INV.<br>H01M4/131<br>H01M4/1391<br>H01M4/36<br>H01M4/505<br>H01M4/525 |
| X<br>A | US 2018/269007 A1 (OH YOUNG JOO [KR] ET AL) 20 September 2018 (2018-09-20)<br>* paragraphs [0025] - [0026], [0036]; claims 1-8; figures 1-4 * | 1-7,9,<br>11-14<br>10 | H01M4/62<br>H01M10/0525<br><br>ADD.<br>H01M4/02 |

**TECHNICAL FIELDS
SEARCHED     (IPC)**

H01M

The present search report has been drawn up for all claims

| Place of search | Date of completion of the search | Examiner |
|---|---|---|
| Munich | 30 April 2025 | Szekely, Noemi Kinga |

EPO FORM 1503 03.82 (P04C01)

## ANNEX TO THE EUROPEAN SEARCH REPORT
## ON EUROPEAN PATENT APPLICATION NO.

EP 24 21 7975

30-04-2025

| Patent document cited in search report | | Publication date | Patent family member(s) | | Publication date |
|---|---|---|---|---|---|
| EP 4261939 | A1 | 18-10-2023 | CN | 116547839 A | 04-08-2023 |
| | | | EP | 4261939 A1 | 18-10-2023 |
| | | | JP | 7642829 B2 | 10-03-2025 |
| | | | JP | 2024502362 A | 18-01-2024 |
| | | | KR | 20220099651 A | 14-07-2022 |
| | | | US | 2024120468 A1 | 11-04-2024 |
| | | | WO | 2022149767 A1 | 14-07-2022 |
| US 2018269007 | A1 | 20-09-2018 | KR | 101835596 B1 | 08-03-2018 |
| | | | US | 2018269007 A1 | 20-09-2018 |

EPO FORM P0459